# EUROPEAN PATENT SPECIFICATION

(11) **EP 1 910 766 B1**
(45) Date of publication and mention of the grant of the patent: **07.01.2009**
(21) Application number: 06765154.7
(22) Date of filing: 31.07.2006
(51) Int. Cl.: F28D 19/04, F28D 9/00, F28F 3/04

(54) **HEAT EXCHANGE SURFACE**
WÄRMETAUSCHOBERFLÄCHE
SURFACE D ÉCHANGE THERMIQUE

(30) Priority: 29.07.2005 GB 0515711
(43) Date of publication of application: 16.04.2008
(73) Proprietor: Howden UK Limited, Belfast BT3 9DT (GB)
(72) Inventor: COOPER, Jim, Glasgow G72 8PU (GB); MCCALLUM, Donald, Glasgow G72 8AH (GB)
(74) Representative: Smith, Samuel Leonard
(86) International application number: PCT/GB2006/002839
(87) International publication number: WO 2007/012874

(56) References cited:
- FR-A1- 2 517 045
- GB-A- 694 039
- GB-A- 992 413
- US-A- 2 596 642
- US-A- 6 019 160

## Description

This invention relates to rotary regenerative air preheaters for boiler plant and industrial furnaces, and more particularly to air preheaters of the kind in which an open-ended cylindrical drum houses a multiplicity of spaced heating-surface elements in the form of undulated metal plates, and is rotatable slowly to move the elements into, successively a stream of hot flue gases and a stream of combustion air, said streams flowing axially through the drum and between the elements in the drum.

According to the prior art, many of the heating-surface elements for such air preheaters have typically been of the forms shown in Fig. 1 to 10 of the accompanying figures. See specifically US 6,019,160.

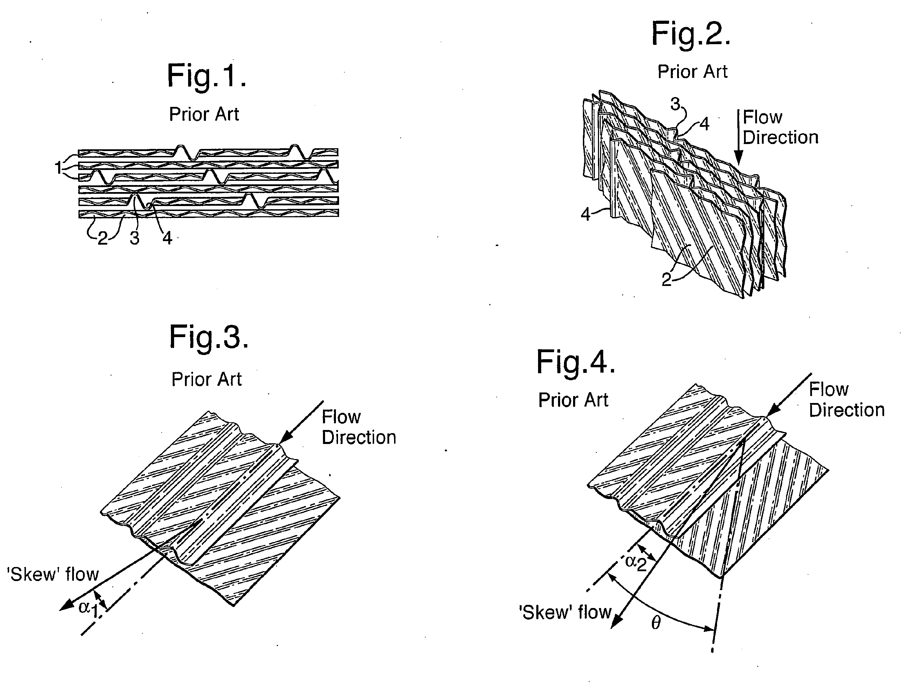

Fig. 1 is a fragmentary end view (extracted from GB992413) of packed undulated heating-surface elements and Fig. 2 is a fragmentary perspective view of the pack of Fig. 1.

Referring to the drawing, typical heating surface elements for an air preheater of the aforesaid kind consist of undulated metal plates 1, the undulations 2 extending at an angle (θ) of typically 30° to the axis of the drum and each alternate undulated plate 1 having axially extending notches 3 and 4 formed in its opposite faces to maintain the _ spacing of the plates.

Fig. 3 is a perspective view of a variation of the form of elements shown in Fig. 2. Close inspection of the view will indicate that the axially extending notches are closer together than those shown on Fig.2, thereby reducing the number of undulations that are between two adjacent axial notches. Note that this figure has also been marked with both the axial flow direction at the inlet to the pack and the small angle (α₁) to the to the flow direction that can develop when flow passes through such packs. This slight 'skew flow' is caused by the angled direction of the undulations in the sheets - particularly those in the undulated only sheet. The valleys in these undulations run underneath the axial notches in the opposing notched sheet and provide a slightly open flow path through which a proportion of the flow can dissipate.

Fig.4 is a perspective view of another variation of the form of elements shown in Fig. 3. Close inspection of the view will indicate that the direction of the undulations in the lower sheet without the axial notches has been reversed, thereby ensuring that the undulations in adjacent element sheets go in different directions. The elements shown in Fig.4 are termed as being "crossed", while those shown in Figs.2 and 3 are termed as being "uncrossed" elements.

Neither the particular reasons for using "crossed" as opposed to "uncrossed" elements nor the performance effects of varying the notch pitch, undulation heights or undulation angle are the subject of this invention and will not be discussed further herein. Nevertheless, the detailed, 'fine tuning' of the combination of these factors play an important part in optimising both the thermal performance and pressure drop characteristics of these elements. In this case, Fig. 4 shows an embodiment of such designs of elements that illustrate an optimised version of this type of profile.

Fig.4 has also been marked with both the axial flow direction at the inlet to the pack and the slight skew angle (α₂) to the flow direction that can still develop when flow passes through such a pack - despite the 'crossed' undulations. Again, this slight skew flow is caused by the angled direction of the undulations in the sheets - particularly those in the undulated only sheet. This figure has also been marked with the undulation angle (θ), which is typically in the range 15° - 35° to the flow direction and is most commonly at 30° to the flow direction. Note further that the skew flow angle is generally very much smaller than the undulation angle (α₂<<θ and indeed, for the element profile shown. α₂ 2 is typically only around 20% of θ (i.e. around 6° to the flow direction).

All of the profiles shown in Figures 1 to 4 are what are commonly referred to as being double undulated (or DU type) profiles where both sheets in the element pair are undulated.

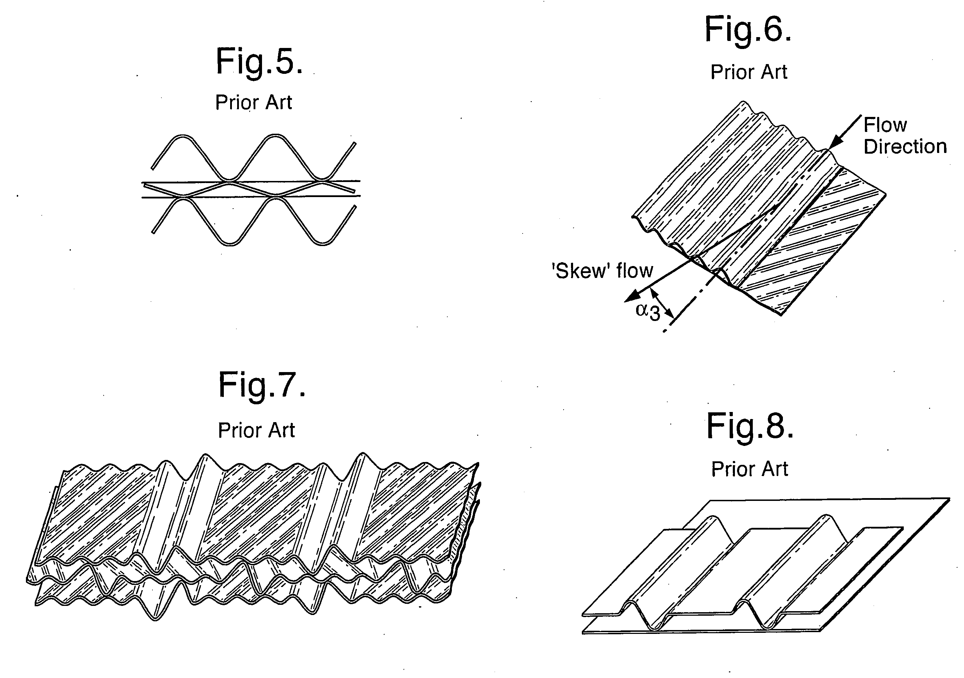

By comparison, Fig.5 is a fragmentary end view of another common form of element profile and Fig. 6 is a fragmentary perspective view of the pack of Fig. 5. This form of element is commonly referred to as being a corrugated undulated (or CU type) profile. In this case, while one sheet in each element pair is a simple undulated sheet similar to those shown in Figs. 1 to 4, the second sheet has a much deeper series of corrugations running axially along the length of the element in the flow direction. Note that, as with the DU-family of elements, this range-of CU-type elements also suffers from a tendency to develop a slight skew flow as flow progresses through the element pack.

The detrimental effect of the of the 'skew' flow component described on the performance or operating characteristics of different element packs can be very variable, ranging between having negligible effect to having a dramatic effect, depending on the detailed geometry of the particular element. However, the general detrimental effects variously attributed to 'skew' flow have been
1. a possible reduction in thermal performance,
2. the production of temperature distributions across the outlet to the pack. At the cold end of the air heater, this can produce a "cold comer", which has been claimed to aggravate cold end fouling.
3. the claimed dissipation of the velocity of the high energy cleaning jets of steam or compressed air that are conventionally used to clean these elements
4. the tendency for cleaned particles to be transported towards one side of the element packs during water washing sequences.

Although developed for another reason, Fig 7 extracted from US6019160 illustrates the main features of another family of heat transfer elements that are commonly referred to as "double notched" or DN-type elements. These elements are named such because both heat transfer elements in every pair contains both axial notches and angled undulations. While this element arrangement does not eliminate the lateral dissipation of flow under the notches, in this case, the arrangement of double notches, combined with the use of a "crossed undulation" format tends to allow the flow to dissipate in either of two directions when flowing through the pack. Thereby, it has been claimed that this element profile produces less skew flow effect and lower temperature stratification at the pack outlet.

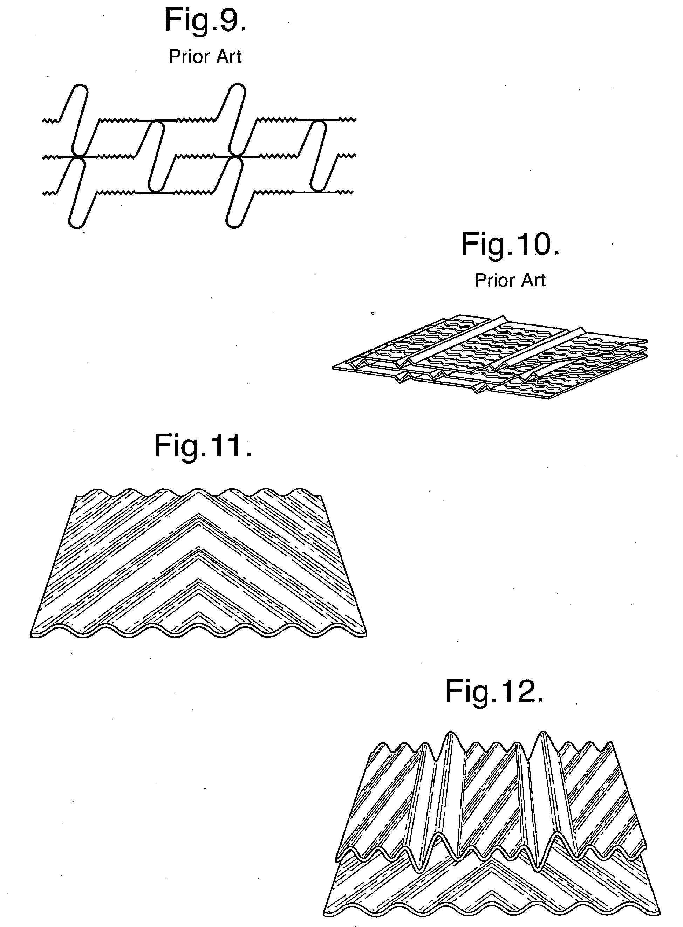

In the extreme, skew flow is eliminated in elements which have line contact between the notched or corrugated sheets and an adjacent flat surface as shown in the simplest of elements (the low performance notched-flat profile) on Fig 8 and in the more complicated higher performance element as shown in Fig 9.

Moreover, there have been various attempts made to optimise the balance of heat transfer performance of these double-notched elements as typified by the element profile shown on Fig. 10 from US6179276. Note that this patent involves the use of transverse undulations arranged in a zig-zag pattern.

Fig 16 depicts a pack of heating surface elements according to US 2,596,642 in which a plurality of ridges are positioned opposite the apexes in a herringbone structure heating surface element. However, this aids the generation of unwanted vortices and furthermore is difficult to manufacture due to the accurate positioning of the ridges needed.

It is thus an aim of the present invention to minimize or at least reduce the net skew flow of the passing gas.

According to the invention there is provided a heating surface element having first and second adj acent regions, the regions extending along side each other in a first direction such that the boundary between said first and second regions is in the first direction, each region having a plurality of undulations arranged laterally side by side, each undulation having a longitudinal extent, the longitudinal extent of undulations in said first region being arranged between 0° and +90° to said first direction and the longitudinal extend of undulations in said second region being arranged between 0° and -90° to said first direction.

The skew flow therefore does not all flow in one direction and the net skew flow will be reduced. The first direction is generally the primary flow and direction of the undulations arranged such that the effect of the undulations in the first and second regions is equal and opposite.

It will be appreciated that there may be a space between the two regions free from undulations. However, the two regions preferably border each other directly to ensure that the skew flow is over the greatest possible area. If the two regions border one another the maximum of the peaks of the undulations in the first region preferably substantially meet the maximum of the peaks of the undulations in the second region.

The invention described above comprises simply a first and second region. However, it will be appreciated that there may be a plurality of first regions and/or a plurality of second regions, with each first region alternating with each second region. This prevents the skew flow from developing to be too strong. If the first and second regions directly border one another the skew air flow will be directed towards a boundary region before being deflected back towards the opposite boundary region. The air therefore follows a zig zag pattern along the heating surface element thereby increasing the time taken to pass over the heating surface element and improving the heat exchange properties. The angle of the longitudinal undulations in the first and second region with respect to the first direction are preferably equal and opposite. The angles are preferably between 10° to 40° (and -10° to -4.0°) and more preferably 25° to 35° and (-25° to -35°).

A pack, such as a stack, of heating surface elements may comprise a heating surface element according to the invention. The pack of heating surface elements may additionally comprise a notched heating surface extending in the first direction. The notch can be in the form of a single, larger undulation or simply a protrusion from the main body of the heating surface element which operates to keep the heating surface elements apart. The notched heating surface element is preferably arranged such that each of said regions is directly opposite no more than one notch. This avoids the notches disturbing the air flow too much.

Rotary air heaters comprising such an undulating heating surface element minimize the skew air flow.

According to an embodiment of the invention there is provided a stack of heating surface elements with a primary direction, said stack comprising a first heating surface element having a herringbone structure, said herringbone structure having a plurality of regions, said plurality of regions being arranged such that the boundary of regions is along said primary direction, said plurality of regions comprising a first region having a plurality of undulations arranged laterally side by side, the longitudinal extent of said undulations in said first region being greater than 0° and less than 90° to said primary direction, said plurality of regions further comprising a second region, adjacent to said first region, said second region having a plurality of undulations arranged laterally side by side, the longitudinal extent of said undulations in said second region being less than 0° and more than -90° to said primary direction, said stack further comprising a second heating surface element, said second heating surface element comprising a notch extending along said primary direction, said notch being arranged such that it is not directly opposite the boundary between said first and second region.

Arranging the notch such that it is not directly opposite the boundary between the first and second regions allows the gas to flow along the herringbone structure and reduces the effect of vortices.

There are preferably a plurality of first regions each with a plurality of undulations arranged laterally side by side, the longitudinal extent of the undulations being between +10° and +80° to the primary direction and a plurality of second region, each having a plurality of undulations arranged laterally side by side, the longitudinal extent of the undulations being between -10° and -80° to the primary direction. Each of the second regions is adjacent to at least one first region and preferably the first and second regions alternate to create an overall herringbone structure.

There are preferably a plurality of notches extending along the primary direction, at least one of the notches being arranged such that it is not directly opposite a boundary between a first and second region in the heating surface element directly opposing it. Indeed, preferably more than one of the notches is not directly opposite a boundary between the first and second region in a directly opposing heating surface element. Ideally, none of the notches directly oppose a boundary between a first and second region in the heating surface element directly opposing the gas flow along the herringbone structure. To achieve this the second heating surface element may be manufactured such that the notches are arranged at an equal spacing having a regular periodicity, and the herringbone structure also has a regular periodicity. To ensure that at least some of the notches are not directly opposite the boundary between the first and second regions the period, or distance between the longitudinal notches is slightly greater than the period or distance between the boundaries between the first and second regions.

A stack or a pack of heating surface elements according to the invention preferably comprises a plurality of first and second heating surface elements arranged alternately. Such that a first heating surface element is directly opposite to second heating surface element and a second heating surface element is directly opposite to first heating surface element.

The first and second regions of the first heating surface element directly border each other, preferably such that the maximum of each peak of undulations in the first region substantially meets the maximum of a peak of undulations in the second region.

The angle of undulations is preferably between +15° and 35° in the first regions and - 15° to -35° to the primary direction in the second region.

The second heating surface element may additionally comprise undulations arranged laterally side by side between the notches. The longitudinal extent of the undulations being either between +10° and +80° to the primary direction or between -10° to -80° to the primary direction. This also helps to direct the gas such that efficient heat transfer can be achieved.

The invention will now be described with reference to the accompanying non-limiting figures:
Figure 1 depicts a undulating heating surface element according to the prior art;
Figure 2 depicts a pack of undulating heating surface elements according to the prior art;
Figure 3 depicts a undulating heating surface element according to the prior art;
Figure 4 depicts a undulating heating surface element according to the prior art;
Figure 5 is a cross section of a pack of heating surface elements of the corrugated undulated type according to the prior art;
Figure 6 is an alternative view of the pack of heating surface elements shown in Figure 5;
Figure 7 shows a pack of heating surface elements disclosed in US6,019,160;
Figure 8 depicts a pack of undulating heating surface elements according to the prior art;
Figure 9 shows a pack of heating surface elements disclosed in US5,836,379;
Figure 10 shows a pack of heating surface elements disclosed in US6,179,276;
Figure 11 shows a heating surface element according to the invention;
Figure 12 shows a pack of heating surface elements according to an embodiment of the invention;
Figure 13 shows a schematic heating surface element according to the invention;
Figure 14 shows flow patterns along heating surface elements according to the invention;
Figure 15 shows flow patterns along heating surface elements according to the invention; and
Figure 16 depicts a pack of heating surface elements according to the prior art.

Having described the prior art, the subject of this invention is illustrated in Figs. 11 to 14. This invention is more closely related to the "double-undulated" and "corrugated-undulated" element profiles shown in Figs. 1 - 6, than the more complicated double notch profiles such as those shown in Figs. 7, 9 and 10. Moreover, the invention provides a method of dramatically reducing the flow dissipation and skew flow characteristics of these profiles by the simple expedient of modifying the geometry of only one sheet in the element pair - the undulated sheet.

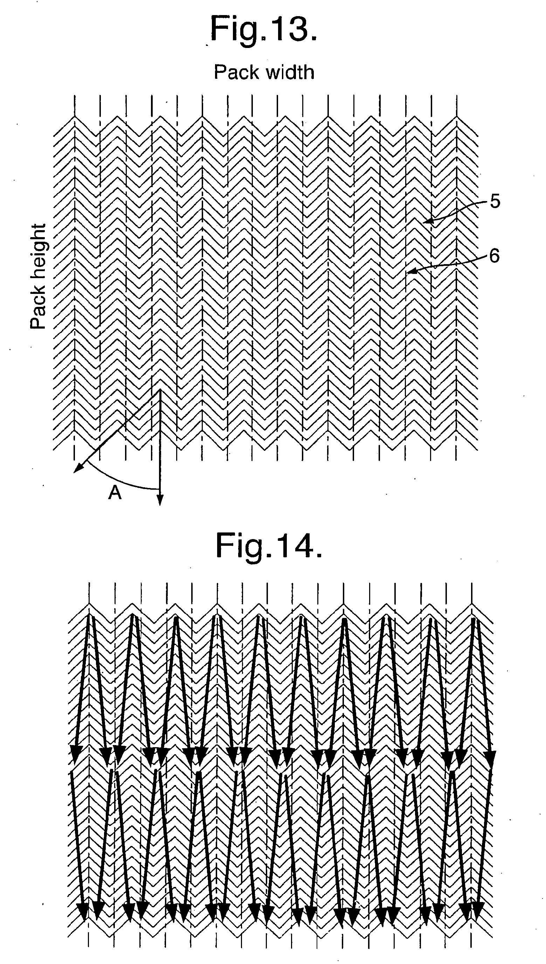

Fig. 11 is a fragmentary view of the modified undulated sheet as proposed in this invention, while Fig. 12 is a fragmentary view of this sheet combined with a notched-undulated plate used in standard double-undulated elements. As can be seen in Figure 11 the undulated sheet comprises a first region of undulation in a first direction and a second region of undulations in a second direction with the peak of the undulations in the first region meeting the peak of the undulations in the second region at a boundary. As can be seen in Figure 12 the notches in the second plate are not directly opposite the boundary between the first and second region of the first sheet. Figure 13 shows a larger view of the arrangement of the two sheets shown in Figure 12 with the notches being indicated by chain dotted lines, 6 and the herringbone shaped undulations 5 shown underneath. As can be seen most of the notches are not superimposed at the apexes of the herringbone structure. In this embodiment this is achieved by the notches having a slightly larger period between them than the period of the undulations. However, this could be achieved by any number of different methods.

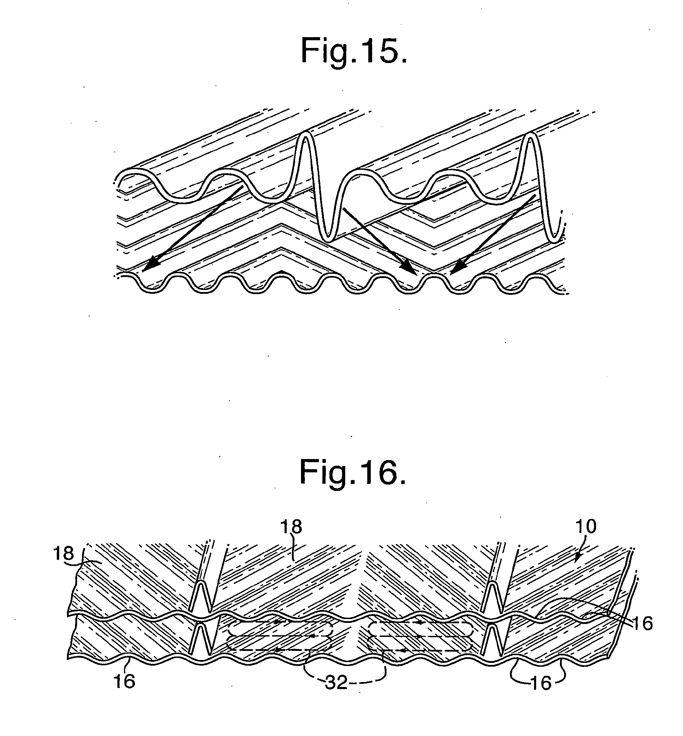

The effect of arranging the notches such that they are not directly opposite the boundary between the different directions of undulation can be seen in Figures 14 and 15. The gas flows along the herringbone structure and when the gas flow reaches the apex of the herringbone structure it meets gas flowing in the opposite direction and is therefore directed back across the herringbone structure as shown in particular in Figure 14. As can be seen, the gas flow passes underneath the notches such that the notches do not present significant interference to the flow pattern and the gas and gas flow is not compartmentalised by the notches. This results in an even flow at the outlet. In contrast, if the notches were arranged to be opposite the apexes of the herringbone structure the combined effect of the notches and the apex of the herringbone structure would aid the generation of vortices between adjacent portions of undulations with opposing directions.

This invention is not limited to use of the undulated sheet shown in Figure 11 with the notched undulated plate shown in Figure 12 but can be used in conjunction with other corrugated forms of sheets such as those shown in Figures 5 and 6. However crucially, at least one, and preferably more of the notches should not be directly opposite the boundary between the different directions of undulations.

Fig. 13 shows a typical wider view of a typical arrangement of these zig-zag undulations across the larger area of the full element sheet. Note that the zig-zag undulations, 5, in this sheet are arranged in a transverse orientation across the sheet. Moreover, the angle (A) of these undulations is typically in the range 15° - 35° to the direction of flow.

Note also on Fig. 13 that the typical positions of the opposing notches in the adjacent sheets in the pair have been shown in chain-dotted vertical lines, 6. Moreover, close examination of the figure will show that the size and angle of the zig-zags have been selected to ensure that each undulation flowing in one direction crosses no more than one opposing notch before the undulation changes direction. While this is an optimum arrangement, it is not an essential part of the invention and the zig-zags might be made larger in dimensions to cross two or more notches or corrugations on the adjacent sheet.

Figs. 14 and 15 shows the simplified, 2-dimensional internal flow patterns that will occur within the element pack. This figure clearly shows the purpose of the transverse zig-zags in the undulated sheet. Note that, on entry to the element pack the incoming flue gas or air will tend to be deflected by the points of the V's in the undulations in one or the other direction across the plate, depending on the local direction of the undulations. The result is that there will not be a single consistent direction in which skew flow is allowed to develop as it passes through the element.

Moreover, as can be seen from the indicated flow pattern further down the element, adjacent, slight skew flow streams will tend to converge together as the flow approaches the valleys of the V's. However, this tendency to converge will be resisted by the opposing components of the flow momentum such that the local flow direction will tend to be straightened out or even reversed as shown in the lower part of the element. The net effect of the transverse zig-zags across the plate will be to eliminate the skew flow that would otherwise occur with normal undulated sheets, thereby producing an even flow across the outlet to the element pack.

This elimination of skew flow effects and constriction of the transverse dissipation of flow thereby helps to overcome all four of the potential problems of skew flow mentioned in the earlier description.

## Claims

1. A stack of heating surface elements with a primary direction, said stack comprising a first heating surface element having a herringbone structure, said herringbone structure having a plurality of regions, said plurality of regions being arranged such that the boundary of regions is along said primary direction, said plurality of regions comprising a first region having a plurality of undulations arranged laterally side by side, the longitudinal extent of said undulations in said first region being greater than 0° and less than 90° to said primary direction, said plurality of regions further comprising a second region, adjacent to said first region, said second region having a plurality of undulations arranged laterally side by side, the longitudinal extent of said undulations in said second region being less than 0° and more than -90° to said primary direction, said stack further comprising a second heating surface element, said second heating surface element comprising a notch extending along said primary direction, said notch being arranged such that it is not directly opposite the boundary between said first and second region.

2. A stack according to claim 1, wherein said first heating surface element comprises a plurality of first regions, each having a plurality of undulations arranged laterally side by side, the longitudinal extent of said undulations being between +10° and +80° to said primary direction, said first heating surface further comprising a plurality of second regions, each having a plurality of undulations arranged laterally side by side, the longitudinal extent of said undulations being between -10° and -80° to said primary direction, each of said second regions being adjacent to at least one first region along a boundary arranged along said primary direction.

3. A stack according to either claim 1 or claim 2, wherein said second heating surface element comprises a plurality of notches extending along said primary direction, at least some of said plurality of notches being arranged such that they are not directly opposite a boundary between a first region and a second region on said first heating surface element.

4. A stack according to any one of the preceding claims, wherein said stack comprises a plurality of first heating surface elements and a plurality of second heating surface elements, each first heating surface element being adjacent to at least one of said second heating elements.

5. A stack according to any one of the preceding claims, wherein said first region directly borders said second region.

6. A stack according to claim 5, wherein, at the boundary between said first and second region, the maximum of each peak of undulations in said first region substantially meets the maximum of a peak of an undulation in said second region.

7. A stack according to any one of the preceding claims, wherein the longitudinal extent of undulations in said first region are at an angle of between +15° to +35° to said primary direction and the longitudinal extent of the undulations in said second region are at an angle of between -15° to -35° to said primary direction.

8. A stack according to any one of the preceding claims, wherein said heating surface element comprises a plurality of undulations arranged laterally side by side, the longitudinal extent of said undulations being either greater than 0° and more than 90° to said primary direction or being less than 0° and more than -90° to said primary direction.

9. A stack according to any one of the preceding claims, wherein the distance between the notches in the second heating surface element is greater than the distance between the boundary between the first and second regions in the first heating surface element.

10. A rotary air heater comprising a stack of heating surface element according to any one of the preceding claims.

## Patentansprüche

1. Stapel an Heizflächenelementen mit einer Hauptrichtung, wobei der Stapel ein erstes Heizflächenelement mit einer Fischgrätenstruktur umfasst,
wobei die Fischgrätenstruktur eine Mehrzahl an Bereichen besitzt,
wobei die Mehrzahl an Bereichen derart angeordnet ist, dass die Grenze der Bereiche entlang der Hauptrichtung verläuft,
wobei die Mehrzahl an Bereichen einen ersten Bereich mit einer Mehrzahl an Wölbungen umfasst, die seitlich nebeneinander angeordnet sind,
wobei die längsgerichtete Erstreckung der Wölbungen in dem ersten Bereich größer als 0° und weniger als 90° zu der Hauptrichtung ist,
wobei die Mehrzahl an Bereichen weiterhin einen zweiten Bereich umfasst, der an den ersten Bereich angrenzt, wobei der zweite Bereich eine Mehrzahl an Wölbungen besitzt, die seitlich nebeneinander angeordnet sind, wobei die längsgerichtete Erstreckung der Wölbungen in dem zweiten Bereich weniger als 0° und mehr als -90° zu der Hauptrichtung ist,
wobei der Stapel weiterhin ein zweites Heizflächenelement umfasst,
wobei das zweite Heizflächenelement eine Einbuchtung umfasst, die sich entlang der Hauptrichtung erstreckt, wobei die Einbuchtung derart angeordnet ist, dass sie der Grenze zwischen dem ersten und zweiten Bereich nicht direkt gegenüberliegt.

2. Stapel nach Anspruch 1, wobei das erste Heizflächenelement eine Mehrzahl an ersten Bereichen umfasst, von denen jeder eine Mehrzahl an Wölbungen besitzt, die seitlich nebeneinander angeordnet sind, wobei die längsgerichtete Erstreckung der Wölbungen zwischen +10° und +80° zu der Hauptrichtung ist,
wobei die erste Heizfläche weiterhin eine Mehrzahl an zweiten Bereichen umfasst, die jeweils eine Mehrzahl an Wölbungen haben, die seitlich nebeneinander angeordnet sind, wobei die längsgerichtete Erstreckung der Wölbungen zwischen -10° und -80° zu der Hauptrichtung ist, wobei jeder der zweiten Bereiche an mindestens einen ersten Bereich entlang einer Grenze, die entlang der Hauptrichtung angeordnet ist, angrenzt.

3. Stapel nach Anspruch 1 oder 2, wobei das zweite Heizflächenelement eine Mehrzahl an Einbuchtungen umfasst, die sich entlang der Hauptrichtung erstrecken, wobei mindestens einige der Mehrzahl an Einbuchtungen derart angeordnet sind, dass sie einer Grenze zwischen einem ersten Bereich und einem zweiten Bereich auf dem ersten Heizflächenelement nicht direkt gegenüberliegen.

4. Stapel nach einem der vorhergehenden Ansprüche, wobei der Stapel eine Mehrzahl an ersten Heizflächenelementen und eine Mehrzahl an zweiten Heizflächenelementen umfasst, wobei jedes erste Heizflächenelement an mindestens eines der zweiten Heizelemente angrenzt.

5. Stapel nach einem der vorhergehenden Ansprüche, wobei der erste Bereich direkt an den zweiten Bereich angrenzt.

6. Stapel nach Anspruch 5, wobei bei der Grenze zwischen dem ersten und dem zweiten Bereich das Maximum jedes Höhepunkts der Wölbungen in dem ersten Bereich im Wesentlichen das Maximum eines Höhepunkts einer Wölbung in dem zweiten Bereich trifft.

7. Stapel nach einem der vorherigen Ansprüche, wobei die längsgerichtete Erstreckung der Wölbungen in dem ersten Bereich in einem Winkel zwischen +15° bis +35° zu der Hauptrichtung ist und die längsgerichtete Erstreckung der Wölbungen in dem zweiten Bereich in einem Winkel zwischen -15° und -35° zu der Hauptrichtung ist.

8. Stapel nach einem der vorhergehenden Ansprüche, wobei das Heizflächenelement eine Mehrzahl an Wölbungen umfasst, die seitlich nebeneinander angeordnet sind, wobei die längsgerichtete Erstreckung der Wölbungen entweder größer als 0° und mehr als 90° zu der Hauptrichtung ist oder weniger als 0° und mehr als -90° zu der Hauptrichtung ist.

9. Stapel nach einem der vorhergehenden Ansprüche, wobei der Abstand zwischen den Einbuchtungen in dem zweiten Heizflächenelement größer als der Abstand zwischen der Grenze zwischen den ersten und zweiten Bereichen in dem ersten Heizflächenelement ist.

10. Drehlufterwärmer umfassend einen Stapel an Heizflächenelementen nach einem der vorhergehenden Ansprüche.

## Revendications

1. Empilement d'éléments de plaque chauffante ayant une direction principale, ledit empilement comportant un premier élément de plaque chauffante présentant une structure en chevrons, ladite structure en chevrons comportant une pluralité de régions, ladite pluralité de régions étant configurée de manière que la frontière des régions aille dans le sens de ladite direction principale, ladite pluralité de régions comprenant une première région présentant une pluralité d'ondulations disposées côte à côte dans le sens latéral, la longueur desdites ondulations dans ladite première région étant supérieure à 0° et inférieure à 90° par rapport à ladite direction principale, ladite pluralité de régions comportant en outre une seconde région adjacente à ladite première région, ladite seconde région comportant une pluralité d'ondulations disposées côte à côte dans le sens latéral, la longueur desdites ondulations dans ladite seconde région étant inférieure à 0° et supérieure à -90° par rapport à ladite direction principale, ledit empilement comprenant en outre un second élément de plaque chauffante, ledit second élément de plaque chauffante comportant un cran s'étendant dans le sens de ladite direction principale, ledit cran étant configuré de manière à ne pas être directement opposé à la frontière entre ladite première et ladite seconde région.

2. Empilement selon la revendication 1, dans lequel ledit premier élément de plaque chauffante comprend une pluralité de premières régions, ayant chacune une pluralité d'ondulations disposées côte à côte dans le sens latéral, la longueur desdites ondulations étant comprise entre +10° et + 80° par rapport à ladite direction principale, ladite première plaque chauffante comprenant en outre une pluralité de secondes régions, chacune ayant une pluralité d'ondulations disposées côte à côte dans le sens latéral, la longueur desdites ondulations étant comprise entre -10° et -80° par rapport à ladite direction principale, chacune desdites secondes régions étant adjacente à au moins une première région le long de la frontière disposée dans le sens de ladite direction principale.

3. Empilement selon la revendication 1 ou la revendication 2, dans lequel ledit second élément de plaque chauffante comprend une pluralité de crans s'étendant le long de ladite direction principale, au moins certains des crans parmi ladite pluralité de crans étant configurés de manière à ne pas être directement opposés à une frontière entre une première région et une seconde région sur ledit premier élément de plaque chauffante.

4. Empilement selon l'une quelconque des revendications précédentes, dans lequel ledit empilement comprend une pluralité de premiers éléments de plaque chauffante et une pluralité de seconds éléments de plaque chauffante, chaque premier élément de plaque chauffante étant adjacent à au moins l'un desdits seconds éléments chauffants.

5. Empilement selon l'une quelconque des revendications précédentes, dans lequel ladite première région borde directement ladite seconde région.

6. Empilement selon la revendication 5, dans lequel, à la frontière entre ladite première et ladite seconde région, le maximum de chaque pic d'ondulations dans ladite première région correspond sensiblement au maximum d'un pic d'une ondulation dans ladite seconde région.

7. Empilement selon l'une quelconque des revendications précédentes, dans lequel la longueur des ondulations dans ladite première région forme un angle compris entre +15° et + 35° par rapport à ladite direction principale et la longueur des ondulations dans ladite seconde région forme un angle compris entre -15° et -35° par rapport à ladite direction principale.

8. Empilement selon l'une quelconque des revendications précédentes, dans lequel ledit élément de plaque chauffante comprend une pluralité d'ondulations disposées côte à côte dans le sens latéral, la longueur desdites ondulations étant soit supérieure à 0° et supérieure à 90° par rapport à ladite direction principale soit inférieure à 0° et supérieure à -90° par rapport à ladite direction principale.

9. Empilement selon l'une quelconque des revendications précédentes, dans lequel la distance entre les crans dans ledit second élément de plaque chauffante est supérieure à la distance entre la frontière entre la première et la seconde région dans le premier élément de plaque chauffante.

10. Radiateur à air rotatif contenant un empilement d'éléments de plaque chauffante selon l'une quelconque des revendications précédentes.
